(19) Europäisches Patentamt
European Patent Office
Office européen des brevets

(11) **EP 4 657 770 A1**

(12) **EUROPEAN PATENT APPLICATION**
published in accordance with Art. 153(4) EPC

(43) Date of publication:
**03.12.2025 Bulletin 2025/49**

(21) Application number: **23933388.3**

(22) Date of filing: **18.04.2023**

(51) International Patent Classification (IPC):
**H04B 7/185** (2006.01)

(52) Cooperative Patent Classification (CPC):
**H04B 7/185**

(86) International application number:
**PCT/CN2023/089054**

(87) International publication number:
**WO 2024/216509 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventor: **ZHANG, Ming
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57)     A communication method and apparatus are provided to implement grating lobe suppression, thereby improving communication performance. The method may be implemented by using the following steps: A communication apparatus obtains a first excitation coefficient and a second excitation coefficient; and receives or sends a signal by using a communication unit in a first mode and a communication unit in a second mode of an antenna, where the antenna includes the communication unit in the first mode and the communication unit in the second mode, the first mode uses the first excitation coefficient, and the second mode uses the second excitation coefficient. The first excitation coefficient and the second excitation coefficient may be determined based on a configured beam sweeping angle, an excitation coefficient configured for the first mode, and an excitation coefficient configured for the second mode.

FIG. 5

**Description**

TECHNICAL FIELD

This application relates to the field of mobile communication technologies, and in particular, to a communication method and apparatus.

BACKGROUND

With large-scale development of low earth orbit (low earth orbit, LEO) satellite communication, space-borne antennas are required to have high gain and multibeam characteristics. The high gain characteristic requires that an antenna array generally have more than 1000 array elements. To meet a sweeping angle requirement, a spacing between array elements is less than a half wavelength of a carrier frequency signal. A large quantity of array elements cause a sharp increase in a quantity of radio frequency channels, resulting in an increase in power consumption of an entire system. In the industry, a spacing between array elements is increased to reduce a quantity of array elements. For example, a spacing between antenna elements is set to one wavelength. Compared with conventional half-wavelength arrangement, a quantity of antenna channels can be reduced by half, thereby reducing power consumption.

However, an increase in a spacing between array elements gives rise to grating lobes, which degrades communication performance.

SUMMARY

This application provides a communication method and apparatus, to implement grating lobe suppression, thereby improving communication performance.

According to a first aspect, a communication method is provided. The method may be implemented by a communication apparatus. The communication apparatus may be a network device, a terminal device, a component in a network device, or a component in a terminal device. The component in this application may include, for example, at least one of a chip, a chip system, a processor, a transceiver, a processing unit, or a transceiver unit. For example, an execution body is the communication apparatus. The method may be implemented by using the following steps: The communication apparatus obtains a first excitation coefficient and a second excitation coefficient; and the communication apparatus receives or sends a signal by using a communication unit in a first mode and a communication unit in a second mode of an antenna, where the antenna includes the communication unit in the first mode and the communication unit in the second mode, the first mode uses the first excitation coefficient, and the second mode uses the second excitation coefficient. The first excitation coefficient and the second excitation coefficient may be determined based on a configured beam sweeping angle, an excitation coefficient configured for the first mode, and an excitation coefficient configured for the second mode.

Based on the method shown in the first aspect, the communication unit in the first mode and the communication unit in the second mode that are of the communication apparatus may respectively use the first excitation coefficient and the second excitation coefficient, and the communication apparatus may receive or send the signal by using the communication unit in the first mode and the communication unit in the second mode. The first excitation coefficient and the second excitation coefficient that are determined based on the beam sweeping angle, the excitation coefficient configured for the first mode, and the excitation coefficient configured for the second mode can be used for grating lobe suppression, thereby improving communication performance.

In a possible implementation, there are nulls at a grating lobe location of the signal.

Based on this implementation, the first excitation coefficient and the second excitation coefficient can generate the null at the grating lobe location, to implement grating lobe suppression, thereby improving communication performance.

In a possible implementation, the first mode is a fundamental mode, and the second mode is a higher-order mode.

In a possible implementation, the communication apparatus may further obtain configuration information, where the configuration information includes the excitation coefficient configured for the first mode and the excitation coefficient configured for the second mode; or the configuration information includes the first excitation coefficient and the second excitation coefficient.

In a possible implementation, the communication apparatus may send a first signal based on the configured beam sweeping angle by using the communication unit in the first mode and the communication unit in the second mode, where the communication unit in the first mode uses the excitation coefficient configured for the first mode, the communication unit in the second mode uses the excitation coefficient configured for the second mode, the first signal is used to determine a transmission channel matrix corresponding to the antenna, and the transmission channel matrix is used to determine the first excitation coefficient and the second excitation coefficient.

Based on this implementation, the communication apparatus may send the first signal by using the communication unit in the first mode and the communication unit in the second mode. When the first signal is sent, the communication unit in the first mode and the communication unit in the second mode respectively use the configured excitation coefficients. The first excitation coefficient and the second excitation coefficient may be determined based on the transmission channel matrix corresponding to the first signal, to properly determine the first excitation coefficient and the second excitation coefficient.

In a possible implementation, the configured beam sweeping angle includes a configured azimuth angle and a configured off-axis angle, the first excitation coefficient includes a first amplitude value and a first phase value, and the second excitation coefficient includes a second amplitude value and a second phase value; and the configured azimuth angle is 0 degrees, the configured off-axis angle is 45 degrees, the first amplitude value is 0.9 times the second amplitude value, and a phase difference between the first phase value and the second phase value is 76 degrees; the configured azimuth angle is 45 degrees, the configured off-axis angle is 45 degrees, the second amplitude value is 0.95 times the first amplitude value, and a phase difference between the first phase value and the second phase value is 49 degrees; or the configured azimuth angle is 90 degrees, the configured off-axis angle is 45 degrees, the second amplitude value is 0.89 times the first amplitude value, and a phase difference between the first phase value and the second phase value is 83 degrees.

In a possible implementation, an amplitude of the communication unit in the first mode in a broadside direction is a maximum value, and an amplitude of the communication unit in the second mode in the broadside direction is a minimum value.

In a possible implementation, the communication unit in the first mode and the communication unit in the second mode are circularly polarized antennas.

In a possible implementation, a center-to-center spacing between any two communication units in the antenna is greater than 0.5 times a wavelength, and the wavelength corresponds to an operating frequency of the antenna. For example, a center-to-center spacing between every two adjacent communication units is set to 0.8 times the wavelength, so that a quantity of array elements and a quantity of channels can be reduced by 37.5%, to reduce power consumption.

According to a second aspect, a communication apparatus is provided. The apparatus may implement the method according to the first aspect and any possible design of the first aspect. The apparatus has a function of the foregoing communication apparatus.

In an optional implementation, the apparatus may include modules that one-to-one correspond to the methods/operations/steps/actions described in the first aspect. The modules may be hardware circuits or software, or may be implemented by a combination of hardware circuits and software. In an optional implementation, the apparatus includes a processing unit (sometimes also referred to as a processing module) and a transceiver unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in the first aspect, the apparatus may include a communication unit and a processing unit.

According to a third aspect, an embodiment of this application further provides a communication apparatus, including a processor, configured to execute a computer program (or computer-executable instructions) stored in a memory. When the computer program (or the computer-executable instructions) is executed, the apparatus is enabled to perform the method according to the first aspect and the possible implementations of the first aspect.

In a possible implementation, the processor and the memory are integrated together.

In another possible implementation, the memory is located outside the communication apparatus.

The communication apparatus further includes a communication interface. The communication interface is used for communication between the communication apparatus and another device, for example, for data and/or signal sending or receiving. For example, the communication interface may be a transceiver, a circuit, a bus, a module, or another type of communication interface.

According to a fourth aspect, a computer-readable storage medium is provided. The computer-readable storage medium is configured to store a computer program or instructions, and when the computer program or the instructions is/are run, the method according to the first aspect and any possible implementation of the first aspect is implemented.

According to a fifth aspect, a computer program product including instructions is provided. When the computer program product runs on a computer, the method according to the first aspect and any possible implementation of the first aspect is implemented.

According to a sixth aspect, an embodiment of this application further provides a communication apparatus, configured to perform the method according to the first aspect and the possible implementations of the first aspect.

According to a seventh aspect, a chip system is provided. The chip system includes a logic circuit (which may alternatively be understood as that the chip system includes a processor, and the processor may include a logic circuit, and the like), and may further include an input/output interface. The input/output interface may be configured to input a message, or may be configured to output a message. The input/output interface may be a same interface, that is, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to the first aspect and any possible implementation of the first aspect. The logic circuit may be further configured to transmit a message to the input/output interface, or receive a message from another communication apparatus through the input/output interface. The chip system may be configured to implement the method according to the first aspect and any possible implementation of the first aspect. The chip system may include a chip, or may include a chip and another discrete device.

Optionally, the chip system may further include a memory, and the memory may be configured to store instructions. The logic circuit may invoke the instructions stored in the memory to implement a corresponding function.

According to an eighth aspect, a communication system is provided. The communication system may include a first communication apparatus and a second communication apparatus. The first communication apparatus may send a signal by using the method according to the first aspect, and the second communication apparatus may receive a signal by using the method according to the first aspect.

For technical effects brought by the second aspect to the eighth aspect, refer to the descriptions of the first aspect. Details are not described herein again.

BRIEF DESCRIPTION OF DRAWINGS

FIG. 1 is a diagram of an architecture of a wireless communication system according to an embodiment of this application;
FIG. 2 is a diagram of an architecture of another wireless communication system according to an embodiment of this application;
FIG. 3 is a diagram of an architecture of another wireless communication system according to an embodiment of this application;
FIG. 4 is a diagram of a structure of an active phased-array antenna according to an embodiment of this application;
FIG. 5 is a schematic flowchart of a communication method according to an embodiment of this application;
FIG. 6 is a diagram of a structure of an array antenna according to an embodiment of this application;
FIG. 7 is a diagram of a structure of an array element according to an embodiment of this application;
FIG. 8 is a diagram of a structure of an antenna channel according to an embodiment of this application;
FIG. 9 is a diagram of locations of a main lobe and a grating lobe of a signal according to an embodiment of this application;
FIG. 10 is a schematic flowchart of an excitation coefficient determining method according to an embodiment of this application;
FIG. 11 is a diagram of a location of a receiving antenna according to an embodiment of this application;
FIG. 12 is a diagram of a structure of a communication apparatus according to an embodiment of this application;
FIG. 13 is a diagram of a structure of another communication apparatus according to an embodiment of this application; and
FIG. 14 is a diagram of a structure of another communication apparatus according to an embodiment of this application.

DESCRIPTION OF EMBODIMENTS

Embodiments of this application provide a communication method and apparatus. The method and the apparatus are based on a same inventive concept. Because the method and the apparatus have a similar problem-resolving principle, for implementations of the apparatus and the method, refer to each other, and no repeated description is provided.

In the description of this application, words such as "first" and "second" are merely used for differentiated description, and cannot be understood as an indication or implication of relative importance, or cannot be understood as an indication or implication of an order. It should be noted that an appearance sequence of "first", "second", and the like is not limited in this application. For example, "second" may appear first, and then "first" appears. This is not limited in this application.

In the description of this application, "at least one (type)" means one (type) or more (types), and "a plurality of (types)" means two (types) or more (types). "At least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

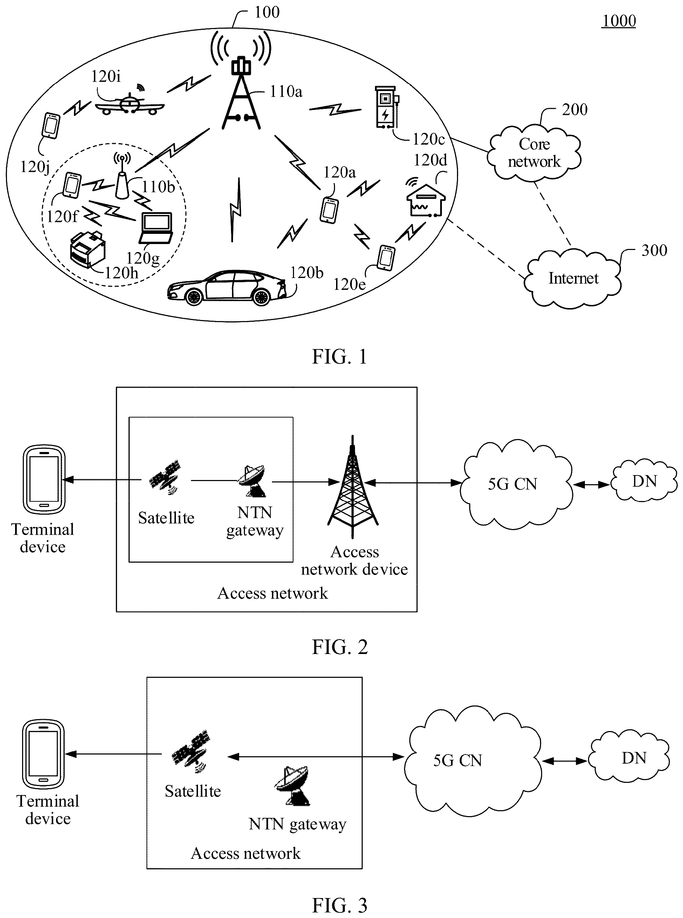

FIG. 1 is a diagram of an architecture of a communication system 1000 to which embodiments of this application are applied. As shown in FIG. 1, the communication system includes a radio access network 100 and a core network (core network, CN) 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. The core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 1 is merely a diagram. The communication system may further include other network devices, for example, may further include a wireless relay device and a wireless backhaul device, which are not shown in FIG. 1.

The radio access network device is an access device used by the terminal to access the communication system in a wireless manner. The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, a long range radio (long range radio, LoRa) system, or a vehicle-to-everything system, or the like. The radio access network device may alternatively be a module or a unit that completes some functions of the base station, for example, may be a central unit (central unit, CU), or may be a distributed unit (distributed unit, DU). The CU herein completes functions of a radio resource control protocol and a packet data convergence protocol (packet data convergence protocol, PDCP) of the base station, and may further complete functions of a service data adaptation protocol (service data adaptation protocol, SDAP). The DU completes functions of a radio link control layer and a medium access control (medium access control, MAC) layer of the base station, and may further complete some or all functions of a physical layer. For specific descriptions of the foregoing protocol layers, refer to technical specifications related to a 3rd generation partnership project (3rd generation partnership project, 3GPP). The radio access network device may be a macro base station (like 110a in FIG. 1), or may be a micro base station or an indoor base station (like 110b in FIG. 1), or may be a relay node or a donor node. A specific technology and a specific device form that are used by the radio access network device are not limited in embodiments of this application. For ease of description, a network device is used as an abbreviation of the radio access network device, and the base station is used as an example of the radio access network device.

A terminal is a device having a wireless transceiver function, and may send a signal to the base station, or receive a signal from the base station. The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, automatic driving, telemedicine, a smart grid, smart furniture, a smart office, smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used by the terminal are not limited in embodiments of this application.

The base station and the terminal may be fixed or movable. The base station and the terminal may be deployed on land, including an indoor or outdoor device, a hand-held device, or a vehicle-mounted device, or may be deployed on water, or may be deployed on an airplane, a balloon, or an artificial satellite. Application scenarios of the base station and the terminal are not limited in embodiments of this application.

Roles of the base station and the terminal may be relative. For example, a helicopter or an uncrewed aerial vehicle 120i in FIG. 1 may be configured as a mobile base station, and for a terminal 120j accessing the radio access network 100 through 120i, the terminal 120i is a base station. However, for the base station 110a, 120i is a terminal. That is, communication between 110a and 120i is performed based on a radio air interface protocol. Certainly, communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 1 may be referred to as a communication apparatus having a function of a base station, and 120a to 120j each in FIG. 1 may be referred to as a communication apparatus having a function of a terminal.

Communication between the base station and the terminal, between the base stations, or between the terminals may be performed by using a licensed spectrum, or may be performed by using an unlicensed spectrum, or may be performed by using both the licensed spectrum and the unlicensed spectrum. Communication may be performed by using a spectrum below 6 gigahertz (gigahertz, GHz), or may be performed by using a spectrum above 6 GHz, or may be performed by using a spectrum below 6 GHz and a spectrum above 6 GHz simultaneously. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell that establishes the wireless connection to the terminal is referred to as a serving cell of the terminal. When communicating with the serving cell, the terminal is further interfered by a signal from a neighboring cell.

This application may be further applied to non-terrestrial networks (non-terrestrial networks, NTN) communication. The NTN is an important part of a 5th generation (5th generation, 5G) and future wireless communication network, and is defined as a network or a network segment that uses a transmission device such as an airborne or a space-borne aircraft as a relay node or a base station. Compared with a conventional terrestrial network, a key characteristic of the non-terrestrial network is that the base station is deployed in the air or in space, or the base station transmits a signal to a terminal device through the non-terrestrial device in the air or in space.

Satellites may be classified into geostationary earth orbit (geostationary earth orbit, GEO) satellites, medium earth orbit (medium earth orbit, MEO) satellites, and low-earth orbit (low-earth orbit, LEO) satellites based on satellite altitudes, namely, orbital altitudes of the satellites. A GEO is a synchronous earth satellite orbit. Satellites running on the orbit are stationary relative to the ground. An orbital altitude of the GEO is generally 35786 kilometers (km). An LEO and an MEO are collectively referred to as non-geostationary orbits (non-geostationary orbit, NGSO). Satellites running on this type of orbits move at a high speed relative to the ground. An orbital altitude of the LEO is generally 160 km to 2000 km, and an orbital altitude of the MEO is generally 2000 km to 35786 km. For the NGSO, based on whether beams of a satellite move with the satellite, earth moving cells (earth moving cell) and earth fixed cells (earth fixed cell) may be further obtained through classification. For the earth moving cell, the cell moves relative to the ground, and a beam direction of the satellite moves with the satellite. For the earth fixed cell, the cell is fixed relative to the ground within a specific time, and an antenna of the satellite may use a beamforming capability of the antenna to fix the beam direction within a specific region of the ground within the specific time. Using an LEO satellite with an orbital altitude of 600 km as an example, a moving speed of the satellite reaches up to 7 kilometers per second (km/s) in this case. In a cell with a diameter of 100 km, a service time of the satellite is only several minutes.

In the NTN communication, operating modes of an NTN device may include a transparent (transparent) mode and a regenerative (regenerative) mode. Based on the operating modes of the NTN device, NTN communication architectures may be classified into the following two types. One is a transparent forwarding architecture. In the architecture, the NTN device may be a relay (relay) or an amplifier, and may perform radio frequency filtering, amplification, and the like, to regenerate a physical layer signal. The NTN device may be responsible for layer 1 (L1) relay, is configured to perform physical layer forwarding, and is invisible to a higher layer. The other is a regenerative architecture. In the architecture, the NTN device has a processing function of an access network device. For example, in the regenerative operating mode, the satellite may be further classified into a regenerative satellite that does not have an inter-satellite link, that is, there is no inter-satellite link (inter-satellite link, ISL) between satellites; or a regenerative satellite that has an inter-satellite link, that is, there is an interface between satellites for direct data exchange, where the inter-satellite link uses an Xn interface; or a regenerative satellite that has a processing function of a distributed unit (distributed unit, DU) of the access network device, where in this scenario, the satellite functions as the DU.

For example, FIG. 2 is a diagram of an NTN scenario to which an embodiment of this application is applicable. The NTN scenario may be an application scenario of a transparent forwarding architecture. In the scenario shown in FIG. 2, a terminal device may communicate with a 5G core network through an access network, and then may be connected to a data network (data network, DN) through the 5G CN. A satellite and an NTN gateway (gateway) may be used as relay devices between the terminal device and an access network device, or as remote radio units (remote radio units, RRUs) of an access network device.

For example, FIG. 3 is a diagram of another NTN scenario to which an embodiment of this application is applicable. The NTN scenario may be an application scenario of the regenerative architecture. In the scenario shown in FIG. 3, a satellite may be used as an access network device, form an access network with an NTN gateway, and communicate with a core network through the NTN gateway. In addition, the satellite may further provide a radio access service for a terminal apparatus. FIG. 3 shows an example of a regenerative satellite architecture without an inter-satellite link.

It should be noted that FIG. 2 and FIG. 3 show only one satellite and one NTN gateway. In practical use, an architecture with a plurality of satellites and/or a plurality of NTN gateways may be used as required. Each satellite may provide a service for one or more terminal devices, each NTN gateway may correspond to one or more satellites, and each satellite may correspond to one or more NTN gateways. This is not specifically limited in embodiments of this application. It may be understood that FIG. 2 and FIG. 3 are merely examples of the NTN scenario, and the NTN scenario may further include another specific scenario. This is not limited in this application.

It may be understood that in an NTN network, the access network device may be deployed on the satellite or another non-terrestrial device, or may be deployed on the ground.

In this application, the NTN network supports communication between the UE and the non-terrestrial device. The non-terrestrial device may be used as an aircraft or a satellite that has a processing function of the access network device in the regenerative architecture, or may be used as a relay node or an amplifier that is deployed in the air or in the atmosphere and that has a processing function of the access network device in the transparent forwarding architecture. In the architecture shown in FIG. 2 or FIG. 3, the non-terrestrial device may include a satellite (or an aircraft or the like).

Currently, in LEO satellite communication scenarios, a space-borne antenna generally has more than 1000 array elements. To meet a sweeping angle requirement of the antenna, a spacing between the array elements of the antenna is less than a half wavelength. Unless otherwise specified, the spacing in this application is a center-to-center spacing between array elements. However, a large quantity of array elements and a small spacing between the array elements cause a sharp increase in a quantity of radio frequency channels, resulting in an increase in power consumption of an entire system. A currently used method for reducing power consumption is to shorten a spacing between array elements of the antenna, for example, the spacing between array elements is one wavelength or greater than the half wavelength. However, increasing the spacing between the array elements generates grating lobes.

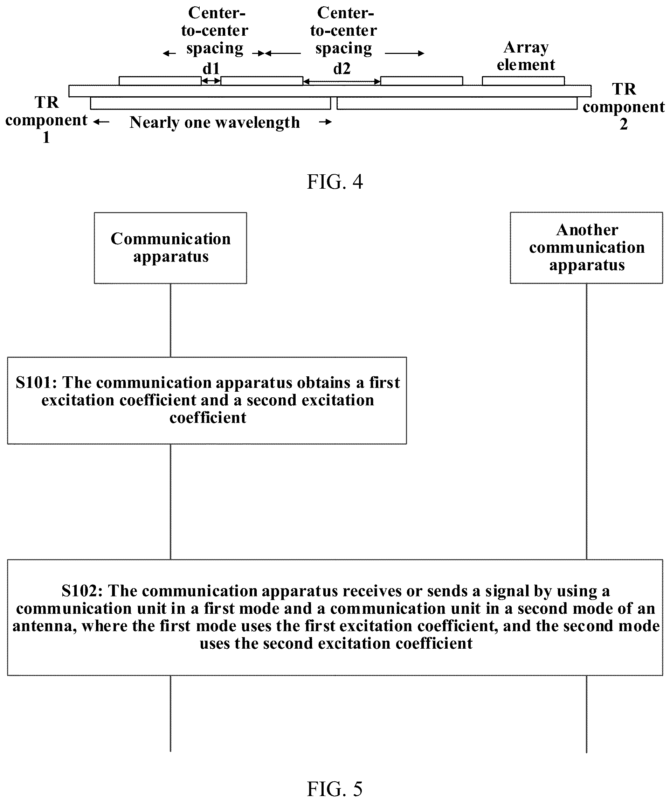

In addition, a size of a transmitter and receiver (transmitter and receiver, TR) component of a current active phased-array antenna is close to one wavelength of the antenna. As shown in FIG. 4, each spacing between the array elements cannot be less than the half wavelength because the size of the TR component is limited, that is, d2>d1 in FIG. 4. Therefore, a center-to-center spacing between two array elements with an edge-to-edge spacing of d2 may exceed the half wavelength of the antenna, resulting in an increase in the spacing between the array elements, and thus generating the grating lobe.

It may be understood that the grating lobe narrows a beam sweeping range of the antenna, reduces beam-pointing accuracy, and interferes with another system. In addition, energy of the grating lobe is usually comparable to that of a main lobe, and is equivalent to the energy of the main lobe reduced by 3 decibels (dB). Consequently, communication performance of the antenna is degraded when there is the grating lobe.

To suppress the grating lobe and improve communication performance of the antenna, an embodiment of this application provides a communication method. The following describes the method with reference to FIG. 5. In FIG. 5, an example in which an execution body is a communication apparatus is used for description. The communication apparatus may be deployed in a network device, a terminal device, a non-terrestrial device, or another communication device. An antenna may be deployed in the communication apparatus, and a spacing between a plurality of array elements of the antenna may be greater than or equal to a half wavelength. For example, the spacing between array elements of the antenna is 0.8 $\lambda$. Compared with a configuration of 0.5 $\lambda$, a quantity of array elements and a quantity of channels may be reduced by 37.5%, to reduce power consumption. $\lambda=c/f$, where c is a velocity of light, and f is an operating frequency of the antenna. Alternatively, a large-spacing array antenna may be deployed in the communication apparatus. As shown in FIG. 5, the communication apparatus may be configured to receive a signal from another communication apparatus, or send a signal to another communication apparatus. In a downlink communication process, the communication apparatus may be a network device, and the another communication apparatus may be a terminal device. In an uplink communication process, the communication apparatus may be a terminal device, and the another communication apparatus may be a network device.

As shown in FIG. 5, the communication method provided in this embodiment of this application may include the following steps.

S101: The communication apparatus obtains a first excitation coefficient and a second excitation coefficient.

The first excitation coefficient and the second excitation coefficient respectively correspond to a first mode and a second mode. The communication apparatus may configure the first excitation coefficient for a communication unit in the first mode of the antenna, that is, the first mode uses the first excitation coefficient. The communication apparatus may further configure the second excitation coefficient for a communication unit in the second mode of the antenna, that is, the second mode uses the second excitation coefficient.

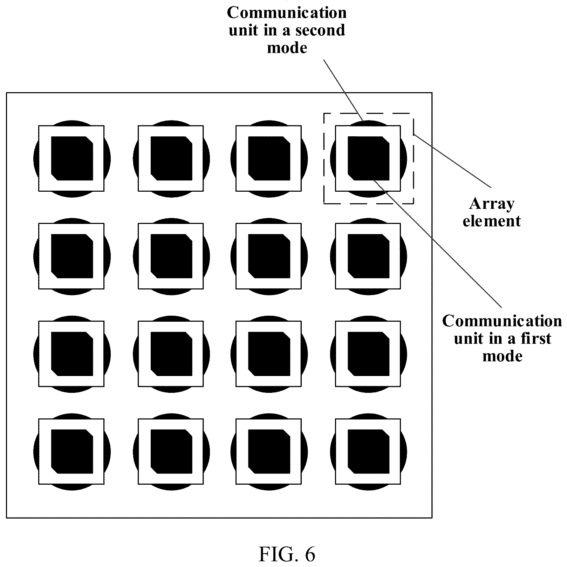

It may be understood that the antenna in this application may include the communication unit in the first mode and the communication unit in the second mode. As shown in FIG. 6, the antenna may include a plurality of array elements, and each array element may include a communication unit in the first mode and a communication unit in the second mode.

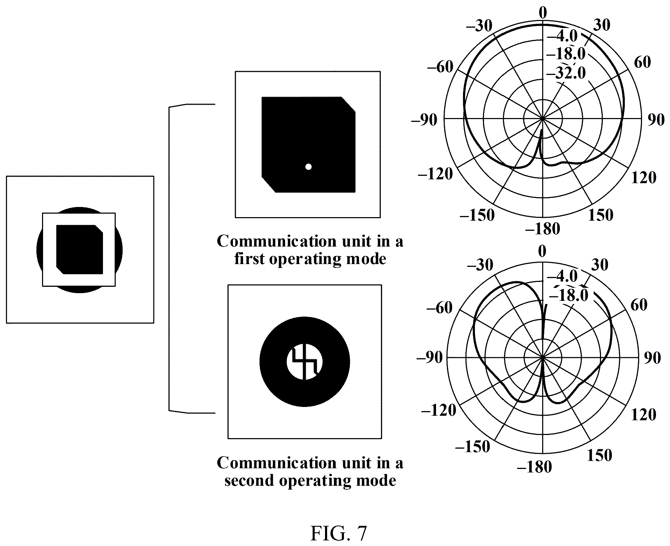

Optionally, each communication unit is a radiator. The radiator in the communication unit in the first mode and the radiator in the communication unit in the second mode have different feed points. As shown in FIG. 7, different respective feed points of the radiators in the first mode and the second mode are represented as a port (port) 1 and a port 2 in FIG. 7. For example, the first mode is a fundamental mode, and the second mode is a higher-order mode. The fundamental mode is located above the higher-order mode or on a same plane as the higher-order mode. Optionally, the radiator in the second mode is located above the radiator in the first mode.

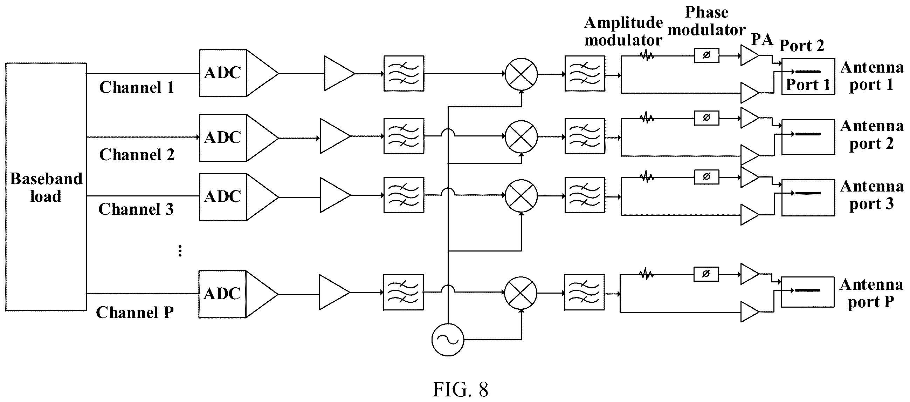

As shown in FIG. 8, at least one of the port 1 and the port 2 may be connected to a multi-functional device having an amplitude modulation function and/or a phase modulation function. For example, a device having an amplitude modulation function is, for example, an amplitude modulator, and a device having a phase modulation function is, for example, a phase modulator. As shown in FIG. 8, the port 2 may be connected to the phase modulator and the amplitude modulator, to adjust an amplitude and/or a phase of a signal at the port 2, so that there is a specific amplitude difference and/or phase difference between a signal at the port 1 and the signal at the port 2. Optionally, in practical application, the port 1 and the port 2 may alternatively be separately connected to a different amplitude modulator and/or phase modulator. In an example, the port 1 may be configured to excite the radiator in the second mode to operate in the higher-order mode, for example, a transverse magnetic (transverse magnetic, TM)21 mode, and the port 2 may be configured to excite the radiator in the first mode to operate in the fundamental mode, for example, TM10 or TM01.

Further, optionally, a direction of a maximum amplitude value of the communication unit in the first mode is different from a direction of a maximum amplitude value of the communication unit in the second mode. FIG. 7 is still used as an example. The direction of the maximum amplitude value of the communication unit in the second mode is 0°, which is consistent with a broadside direction of the antenna; and the direction of the maximum amplitude value of the communication unit in the first mode is about 40°, which is inconsistent with the broadside direction of the antenna. In addition, optionally, an amplitude of the communication unit in the first mode is 0 in the broadside direction. For example, as shown in FIG. 7, an amplitude value of the communication unit in the first mode in a 0° direction is 0. The broadside direction is a direction perpendicular to an array plane.

In this application, the fundamental mode is a mode with a longest cut-off wavelength. Another mode other than the fundamental mode is a higher-order mode. If a wave propagation direction is a Z axis, TMxy means that a quantity of half wavelengths of a communication unit on an X axis is x, and a quantity of half wavelengths of the communication unit on a Y axis is y. The antenna in this application may also be referred to as a hybrid (hybrid) mode antenna.

It may be understood that the first excitation coefficient and the second excitation coefficient respectively include an amplitude value coefficient and a phase value coefficient. In this application, for ease of description, an amplitude value included in the first excitation coefficient may be referred to as a first amplitude value, a phase value included in the first excitation coefficient may be referred to as a first phase value, an amplitude value included in the second excitation coefficient may be referred to as a second amplitude value, and a phase value included in the second excitation coefficient may be referred to as a second phase value. The first amplitude value and the first phase value may be used to excite the communication unit in the first mode, and the second amplitude value and the second phase value may be used to excite the communication unit in the second mode.

The first excitation coefficient and the second excitation coefficient are determined based on the following factors.

(1) Configured beam sweeping angle

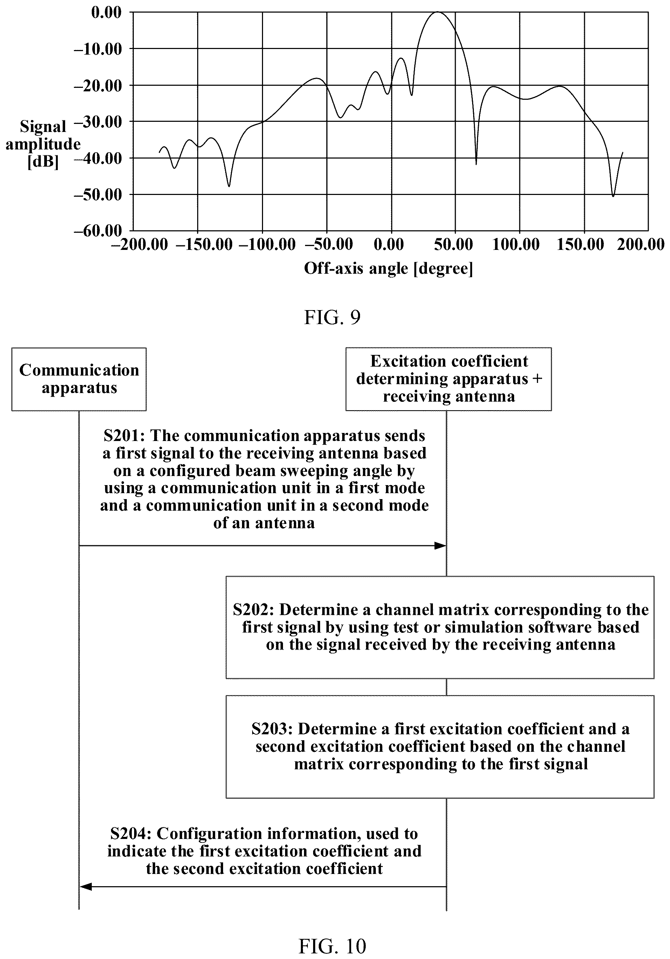

The configured beam sweeping angle includes a configured azimuth angle and a configured off-axis angle. In this application, an angle may be represented as (a, b), where a represents an azimuth angle, and b represents an off-axis angle. For example, for a single-mode large-spacing array antenna (that is, a large-spacing array antenna in which all communication units use a same mode), when an antenna sweeping angle is (0°, 45°), as shown in FIG. 9, it may be obtained through simulation or calculation that a grating lobe with comparable energy to a main lobe (0°, 45°) is generated in a direction (0°, -45°). That is, when the configured azimuth angle is 0° and the configured off-axis angle is 45°, the single-mode large-spacing array antenna may generate a grating lobe at a location with the azimuth angle of 0° and the off-axis angle of 45°. Therefore, it can be learned that a grating lobe angle is related to the configured beam sweeping angle.

(2) Excitation coefficient configured for the first mode

The excitation coefficient configured for the first mode is an excitation coefficient specified by an antenna control unit for the communication unit in the first mode. In this application, the excitation coefficient may include an amplitude value and a phase value. Therefore, the communication unit in the first mode may send and/or receive a signal by using the configured amplitude value and the configured phase value. It may be understood that the excitation coefficient may be different from the first excitation coefficient. It may also be understood that the first excitation coefficient is an excitation coefficient adjusted based on the excitation coefficient configured for the first mode, where the adjustment is performed to generate nulls at a grating lobe location.

(3) Excitation coefficient configured for the second mode

The excitation coefficient configured for the second mode is an excitation coefficient specified by the antenna control unit for the communication unit in the second mode. The communication unit in the second mode may send and/or receive a signal by using a configured amplitude value and a configured phase value. Similar to a relationship between the first excitation coefficient and the excitation coefficient configured for the first mode, the second excitation coefficient may be understood as an excitation coefficient adjusted based on the excitation coefficient configured for the second mode, where the adjustment is performed to generate the null at the grating lobe location.

It may be understood that, for the hybrid mode antenna, the excitation coefficient configured for the first mode, the excitation coefficient configured for the second mode, and the configured beam sweeping angle are all factors affecting the grating lobe location. Therefore, at least one of the excitation coefficient configured for the first mode, the excitation coefficient configured for the second mode, and the configured beam sweeping angle is used as a basis for determining the first excitation coefficient and the second excitation coefficient, so that the first excitation coefficient and the second excitation coefficient can be used to generate the null to suppress a grating lobe.

That is, the first amplitude value, the first phase value, the second amplitude value, and the second phase value are determined based on the configured beam sweeping angle, the excitation coefficient configured for the first mode, and the excitation coefficient configured for the second mode.

Optionally, in S101, the communication apparatus may obtain configuration information of the first excitation coefficient and the second excitation coefficient, and therefore obtain the first excitation coefficient and the second excitation coefficient based on the configuration information. For example, the configuration information may be set in an antenna test phase or a factory delivery phase.

In a possible implementation, the first excitation coefficient and the second excitation coefficient may be configured at an antenna port. FIG. 8 is still used as an example. The port 1 and the port 2 respectively correspond to the communication unit in the first mode and the communication unit in the second mode. Therefore, the amplitude modulator and/or the phase modulator separately corresponding to the port 2 may be changed to set the excitation coefficients for the communication unit in the first mode and the communication unit in the second mode. For example, excitation coefficients configured for the port 1 and the port 2 are both represented as (B0, β0), and the excitation coefficients configured for the communication unit in the first mode and the communication unit in the second mode are both (B0, β0). In this case, the amplitude modulator and the phase modulator that correspond to the port 2 may not generate an amplitude difference and a phase difference. In this example, B0 represents an amplitude parameter, and is used to configure the amplitude modulator; and β0 represents a phase parameter, and is used to configure the phase modulator.

In addition, an excitation coefficient may be configured for the communication unit in the first mode and an excitation coefficient may be configured for the communication unit in the second mode. For example, the excitation coefficients configured for the ports are represented as (B10, β10; B20, β20), where B10 and β10 correspond to the communication unit in the first mode, and B20 and β20 correspond to the communication unit in the second mode. In this example, the amplitude modulator corresponding to the port 2 shown in FIG. 8 may generate an amplitude difference of (B20-B10), and the phase modulator may generate a phase difference of (β20-β10). If the port 1 corresponds to an amplitude modulator and a phase modulator and the port 2 corresponds to an amplitude modulator and a phase modulator, the amplitude modulator and the phase modulator that correspond to the port 1 are configured by using (B10, β10), and the amplitude modulator and the phase modulator that correspond to the port 2 are configured by using (B20, β20).

In an example, the communication unit in the first mode and/or the communication unit in the second mode each may be a circularly polarized antenna. For example, the communication unit in the first mode may be a circularly polarized microstrip antenna combining TM10 and TM01. The communication unit in the second mode may be a circular circularly polarized microstrip antenna with a TMn1 mode, or a circular circularly polarized microstrip antenna with TM2m, where n=2, 3, 4, ..., and m=1, 2, 3, ...

In a possible implementation, an action that the communication apparatus obtains the first excitation coefficient and the second excitation coefficient in S101 may be understood as that the communication apparatus obtains respective configuration information of the first excitation coefficient and the second excitation coefficient, the communication apparatus configures the first excitation coefficient and the second excitation coefficient, or the communication apparatus activates or uses the communication unit in the first mode configured with the first excitation coefficient and activates or uses the communication unit in the second mode configured with the second excitation coefficient.

S102: The communication apparatus receives or sends a signal by using a communication unit in a first mode and a communication unit in a second mode of an antenna.

In S102, when the signal is sent or received by using the antenna, the first mode uses the first excitation coefficient and the second mode uses the second excitation coefficient. It may be understood that, in this application, the null may be generated at the grating lobe location by using the first excitation coefficient and the second excitation coefficient to suppress the grating lobe, thereby improving signal quality. The null is caused by the first excitation coefficient and the second excitation coefficient.

The following describes a manner of determining the first excitation coefficient and the second excitation coefficient with reference to a procedure shown in FIG. 10. A process of determining the first excitation coefficient and the second excitation coefficient shown in FIG. 10 may be performed by the communication apparatus or another apparatus configured to configure an antenna excitation coefficient of the communication apparatus. The process may be performed before the antenna or the communication apparatus is delivered from a factory, that is, the first excitation coefficient and the second excitation coefficient may be set in the factory delivery phase. Therefore, the first excitation coefficient and the second excitation coefficient do not need to be additionally set after the antenna or the communication apparatus is delivered from the factory. In addition, it is not excluded that the process is performed after the antenna or the communication apparatus is delivered from the factory.

In FIG. 10, an example in which the communication apparatus and an excitation coefficient determining apparatus are execution bodies is used for description. The excitation coefficient determining apparatus may obtain a receiving signal of a first signal, and determine the first excitation coefficient and the second excitation coefficient. In FIG. 10, an example in which a receiving antenna is deployed on the excitation coefficient determining apparatus is specifically used for description. For example, the excitation coefficient determining apparatus may be an antenna test device, apparatus, or the like. In practical application, the excitation coefficient determining apparatus and the receiving antenna may alternatively be disposed separately. In addition, the communication apparatus and the excitation coefficient determining apparatus may alternatively be integrated. For example, a network device may deploy the antenna of the communication unit in the first mode and the communication unit in the second mode, and the network device may determine the first excitation coefficient and the second excitation coefficient, and configure the communication unit in the first mode and the communication unit in the second mode based on the first excitation coefficient and the second excitation coefficient.

For example, this process may include the following steps.

S201: The communication apparatus sends a first signal to the receiving antenna based on the configured beam sweeping angle by using the communication unit in the first mode and the communication unit in the second mode that are of the antenna. An antenna in the communication apparatus is referred to as a transmitting antenna below for distinguishing from the receiving antenna.

When sending the first signal, the communication unit in the first mode of the transmitting antenna uses the excitation coefficient configured for the first mode, and the communication unit in the second mode of the transmitting antenna uses the excitation coefficient configured for the second mode. The first signal is used to determine a transmission channel matrix corresponding to the antenna, and the transmission channel matrix is used to determine the first excitation coefficient and the second excitation coefficient.

Optionally, the communication apparatus may obtain configuration information, where the configuration information includes the excitation coefficient configured for the first mode and the excitation coefficient configured for the second mode. For example, the configuration information may be determined based on location information or access information of a user. It may be understood that the configuration information is used to indicate an excitation coefficient of the antenna before adjustment.

In S201, the receiving antenna may include a first receiving antenna and a second receiving antenna, which are respectively disposed at a main lobe location and a grating lobe location. The main lobe location and the grating lobe location are determined based on the configured beam sweeping angle.

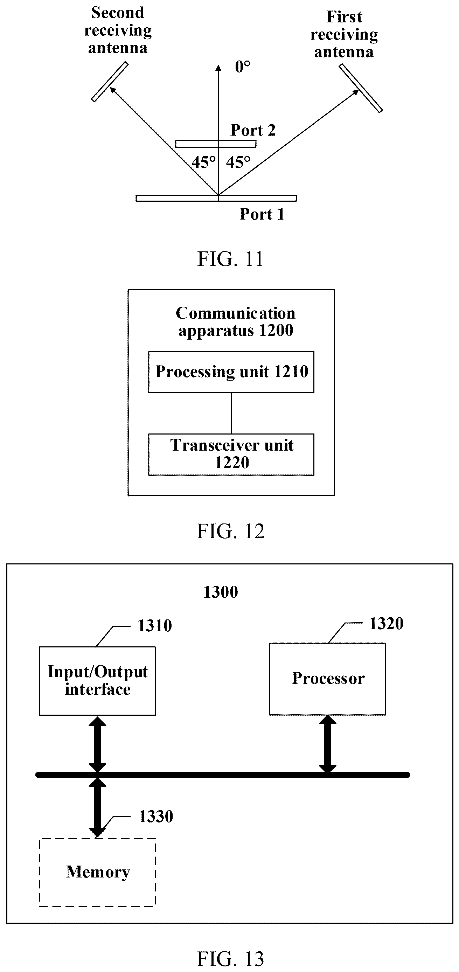

For example, it can be learned from FIG. 9 that, when the antenna sweeping angle is (0°, 45°), a main lobe direction and a grating lobe direction are (0°, 45°) and (0°, -45°) respectively. Therefore, as shown in FIG. 11, the first receiving antenna and the second receiving antenna in this example are disposed in a 45° direction and a -45° direction respectively. When the communication unit in the second mode is located above the communication unit in the first mode in each array element, a feed port of the communication unit in the first mode is the port 1, and a feed port of the communication unit in the second mode is the port 2, it may be considered that the port 1 and the port 2 are respectively located at different heights.

S202: The excitation coefficient determining apparatus determines, by using test or simulation software based on the signal received by the receiving antenna, a channel matrix H corresponding to the first signal.

H meets:

$$H=[S_{tr}]^T *[S_{tr}].$$

$[S_{tr}]$ represents a transmission coefficient matrix between the transmitting antenna of the communication apparatus and the receiving antenna. The transmitting antenna may correspond to a plurality of antenna ports, each antenna port corresponds to at least one array element, and each array element includes a communication unit in a first mode and a communication unit in a second mode. A letter subscript t represents the transmitting antenna, and a subscript r represents the receiving antenna. $[A]^T$ represents a transposition of a matrix [A]. It may be understood that, as shown in FIG. 8, each antenna port corresponds to a channel.

For example, $S_{tr}$ may be obtained through calculation or simulation. For example, $S_{tr}$ may be determined based on energy of a signal received by each receiving antenna and energy of a signal of a transmitting antenna.

S203: The excitation coefficient determining apparatus determines the first excitation coefficient and the second excitation coefficient based on the channel matrix H corresponding to the first signal.

For example, the first excitation coefficient and the second excitation coefficient may be determined based on an eigenvalue solving process of a matrix Tarray.

The matrix Tarray meets:

$$Tarray=W*H.$$

W is a parameter of a gain ratio of the energy of the main lobe to the energy of the grating lobe. For example, if the energy of the grating lobe is reduced by 20 dB to implement a null, W may indicate that the gain ratio of the energy of the main lobe to the energy of the grating lobe is 100:1. For example, W is a binary matrix, and two elements of the matrix are respectively 100 and 1.

H is a transmission matrix between the transmitting antenna and the receiving antenna. As described above, H may be obtained based on $S_{tr}$.

For example, an eigenvector of the matrix Tarray may be determined by performing SVD decomposition on the matrix Tarray. A result of SVD decomposition may represent an adjustment value of an excitation coefficient corresponding to each antenna port of the antenna, and is represented as (Ail, $\alpha i1$; Ai2, $\alpha i2$), where i=0, 2, ..., P, and P is a total quantity of antenna ports. Ai1 represents an amplitude adjustment value of the communication unit in the first mode corresponding to an $i^{th}$ antenna port, $\alpha i1$ represents a phase adjustment value of the communication unit in the first mode corresponding to the $i^{th}$ antenna port, Ai2 represents an amplitude adjustment value of the communication unit in the second mode corresponding to the $i^{th}$ antenna port, and $\alpha i2$ represents a phase adjustment value of the communication unit in the second mode corresponding to the $i^{th}$ antenna port. The $i^{th}$ communication unit in the first mode and the $i^{th}$ communication unit in the second mode are overlapped.

Assuming that an excitation coefficient configured for the $i^{th}$ antenna port when the first signal is sent is represented as (B0, $\beta0$), an adjusted excitation coefficient of the port is represented as (B0*Ai1, $\beta0+\alpha i1$; B0*Ai2, $\beta0+\alpha i2$). It may be understood that (B0, $\beta0$) may be considered as the excitation coefficient configured for the $i^{th}$ antenna port when the first signal is sent, and (B0*Ai1, $\beta0+\alpha i1$; B0*Ai2, $\beta0+\alpha i2$) may be considered as an excitation coefficient used to generate nulls at the grating lobe location. The first excitation coefficient is (B0*Ai1, $\beta0+\alpha i1$), and may be configured for the port of the communication unit in the first mode. Correspondingly, the second excitation coefficient is (B0*Ai2, $\beta0+\alpha i2$).

It may be understood that there may be a plurality of combinations of the first amplitude value and the second amplitude value. In this application, the first amplitude value and the second amplitude value are only limited to meet a specific proportional relationship, and respective specific values of the first amplitude value and the second amplitude value are not limited. For example, for the $i^{th}$ antenna port, the first amplitude value and the second amplitude value are respectively calculated as (B0*Ai1) and (B0*Ai2), and the first amplitude value differs from the second amplitude value by a factor of (Ai1/Ai2).

In addition, there may be a plurality of combinations of the first phase value and the second phase value. In this application, the first phase value and the second phase value are only limited to meet a specific phase difference relationship, and respective specific values of the first phase value and the second phase value are not limited. For example, the first phase value and the second phase value are respectively calculated as ($\beta0+\alpha i1$) and ($\beta0+\alpha i2$), and a difference between the first phase value and the second phase value is ($\alpha i1-\alpha i2$) degrees.

The following provides examples of some possible combinations of the first excitation coefficient and the second excitation coefficient. Optionally, a combination of the first excitation coefficient and the second excitation coefficient may be determined according to a method shown in FIG. 13.

In an example, when the configured beam sweeping angle is (0°, 45°), the first amplitude value is 0.9 times the second amplitude value, and a phase difference between the first phase value and the second phase value is 76 degrees. For example, the first amplitude value is 0.9, the second amplitude value is 1, the first phase value is 76 degrees, and the second phase value is 0 degrees. A unit of an amplitude value in this application may be watt (W), milliwatt (mW), kilowatt (kW), or the like. This is not specifically limited.

In another example, when the configured beam sweeping angle is (45°, 45°), the second amplitude value is 0.95 times the first amplitude value, and a phase difference between the first phase value and the second phase value is 49 degrees. For example, the first amplitude value is 1, the second amplitude value is 0.95, the first phase value is 68.5 degrees, and the second phase value is 19.5 degrees.

In another example, when the configured beam sweeping angle is (90°, 45°), the second amplitude value is 0.89 times the first amplitude value, and a phase difference between the first phase value and the second phase value is 83 degrees. For example, the first amplitude value is 1, the second amplitude value is 0.95, the first phase value is 154 degrees, and the second phase value is 71 degrees.

S204: The excitation coefficient determining apparatus sends configuration information to the communication apparatus, to indicate the first excitation coefficient and the second excitation coefficient.

It may be understood that, if the excitation coefficient determining apparatus and the communication apparatus are integrated, or the excitation coefficient determining apparatus and the communication apparatus are a same device or apparatus, S204 does not need to be performed.

Based on the method shown in FIG. 10, the first excitation coefficient and the second excitation coefficient can be properly determined.

It may be understood that, to implement functions in the foregoing embodiments, an embodiment of this application further provides a communication apparatus. The communication apparatus may include corresponding hardware structures and/or software modules for performing various functions. A person skilled in the art should be easily aware that, in this application, the units and method steps in the examples described with reference to embodiments disclosed in this application can be implemented by hardware or a combination of hardware and computer software. Whether a function is performed by using hardware or hardware driven by computer software depends on a particular application scenario and design constraint of the technical solutions.

FIG. 12 to FIG. 14 are diagrams of structures of possible communication apparatuses according to embodiments of this application. The communication apparatuses may be configured to implement functions corresponding to the foregoing method embodiments, and therefore can also achieve the beneficial effects of the foregoing method embodiments. In a possible implementation, the communication apparatus may be the network device or the terminal device shown in FIG. 1. For related details and effects, refer to the descriptions in the foregoing embodiments.

As shown in FIG. 12, the communication apparatus 1200 includes a processing unit 1210 and a transceiver unit 1220. The transceiver unit 1220 may alternatively be a transceiver unit, an input/output interface, or the like. The communication apparatus 1200 may be configured to implement functions of the communication apparatus in the method embodiment shown in FIG. 5 and/or FIG. 10.

For example, when implementing the method embodiment shown in FIG. 5, the processing unit 1210 may be configured to obtain a first excitation coefficient and a second excitation coefficient. The transceiver unit 1220 may be configured to receive or send a signal by using a communication unit in a first mode and a communication unit in a second mode of an antenna.

Optionally, the transceiver unit 1220 may be further configured to obtain configuration information, where the configuration information may include an excitation coefficient configured for the first mode and an excitation coefficient configured for the second mode, or include the first excitation coefficient and the second excitation coefficient.

Optionally, the transceiver unit 1220 may be further configured to send a first signal based on a configured beam sweeping angle, where the communication unit in the first mode uses the excitation coefficient configured for the first mode, the communication unit in the second mode uses the excitation coefficient configured for the second mode, the first signal is used to determine a transmission channel matrix corresponding to the antenna, and the transmission channel matrix is used to determine the first excitation coefficient and the second excitation coefficient.

For descriptions of the foregoing technical terms, refer to descriptions of the method embodiments, and details are not described herein again.

It may be understood that in embodiments of this application, division into modules is an example, and is merely logical function division. In practical implementation, there may be another division manner. In addition, functional modules in embodiments of this application may be integrated into one processor, each module may exist alone physically, or two or more modules may be integrated into one module. The integrated module may be implemented in a form of hardware, or may be implemented in a form of a software functional module.

FIG. 13 shows a communication apparatus 1300 according to an embodiment of this application. The communication apparatus 1300 is configured to implement the communication method provided in this application. The communication apparatus 1300 may be a communication apparatus to which the communication method is applied, may be a component in the communication apparatus, or may be an apparatus that can be used in combination with the communication apparatus. The communication apparatus 1300 may be a signal sending end or a signal receiving end. The communication apparatus 1300 may be a chip system or a chip. In this embodiment of this application, the chip system may include a chip, or may include a chip and another discrete device. The communication apparatus 1300 includes at least one processor 1320, configured to implement the communication method provided in embodiments of this application. The communication apparatus 1300 may further include an input/output interface 1310, where an output interface may also be referred to as an input/output interface. In this embodiment of this application, the input/output interface 1310 may be configured to communicate with another apparatus by using a transmission medium, and a function of the input/output interface 1310 may include sending and/or receiving. For example, when being the chip, the communication apparatus 1300 performs transmission with another chip or device through the input/output interface 1310. The processor 1320 may be configured to implement the method described in the foregoing method embodiment.

For example, the processor 1320 may be configured to perform an action performed by the processing unit 1210, and the input/output interface 1310 may be configured to perform an action performed by the transceiver unit 1220. Details are not described again.

Optionally, the communication apparatus 1300 may further include at least one memory 1330, configured to store program instructions and/or data. The memory 1330 is coupled to the processor 1320. The coupling in this embodiment of this application may be indirect coupling or communication connection between apparatuses, units, or modules in an electrical form, a mechanical form, or another form, and is used for information exchange between the apparatuses, the units, or the modules. The processor 1320 may cooperate with the memory 1330. The processor 1320 may execute the program instructions stored in the memory 1330. At least one of the at least one memory may be integrated with the processor.

In embodiments of this application, the memory 1330 may be a non-volatile memory, for example, a hard disk drive (hard disk drive, HDD) or a solid-state drive (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. The memory in this embodiment of this application may alternatively be a circuit or any other apparatus that can implement a storage function, and is configured to store the program instructions and/or the data.

In this embodiment of this application, the processor 1320 may be a general purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general purpose processor may be a microprocessor, any conventional processor, or the like. The steps in the method disclosed with reference to embodiments of this application may be directly performed and completed by using a hardware processor, or may be performed and completed by using a combination of a hardware module and a software module in the processor.

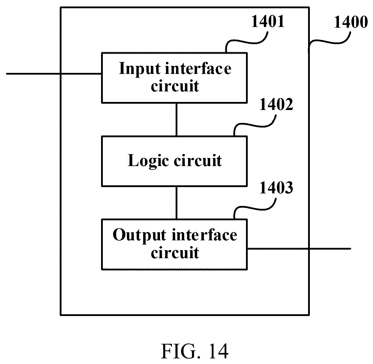

FIG. 14 shows a communication apparatus 1400 according to an embodiment of this application. The communication apparatus 1400 is configured to implement the communication method provided in this application. The communication apparatus 1400 may be a communication apparatus to which the communication method shown in embodiments of this application is applied, or may be a component in the communication apparatus, or may be an apparatus that can be used in combination with the communication apparatus. The communication apparatus 1400 may be a signal sending end or a signal receiving end. The communication apparatus 1400 may be a chip system or a chip. In this embodiment of this application, the chip system may include a chip, or may include a chip and another discrete device. The communication method provided in the foregoing embodiments may be partially or completely implemented by hardware or software. When the communication method is implemented by hardware, the communication apparatus 1400 may include an input interface circuit 1401, a logic circuit 1402, and an output interface circuit 1403.

Optionally, an example in which the apparatus is configured to implement a function of a receiving end is used. The input interface circuit 1401 may be configured to perform a receiving action performed by the transceiver unit 1220, the output interface circuit 1403 may be configured to perform a sending action performed by the transceiver unit 1220, and the logic circuit 1402 may be configured to perform an action performed by the processing unit 1210. Details are not described again.

Optionally, in a specific implementation, the communication apparatus 1400 may be a chip or an integrated circuit.

Some or all of operations and functions performed by the communication apparatus described in the foregoing method embodiment of this application may be implemented by using the chip or the integrated circuit.

An embodiment of this application provides a computer-readable storage medium storing a computer program. The computer program includes instructions for performing the foregoing method embodiment.

An embodiment of this application provides a computer program product including instructions. The computer program product, when running on a computer, enables the computer to perform the foregoing method embodiment.

An embodiment of this application provides a communication system. Specifically, the communication system may include a communication apparatus configured to implement the method shown in FIG. 5 and/or FIG. 10, and another communication apparatus used in cooperation with the communication apparatus. For details, refer to related descriptions in the foregoing method embodiment. Details are not described herein again. Optionally, the communication system may include the structure shown in FIG. 1.

A person skilled in the art should understand that embodiments of this application may be provided as a method, a system, or a computer program product. Therefore, this application may use a form of a complete hardware embodiment, a complete software embodiment, or an embodiment in which a software aspect and a hardware aspect are combined. In addition, this application may use a form of a computer program product that is implemented on one or more computer-usable storage media (including but not limited to a disk memory, a CD-ROM, and an optical memory) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general purpose computer, a dedicated computer, an embedded processor, or a processor of another programmable data processing device to generate a machine, so that the instructions executed by the computer or the processor of the another programmable data processing device generate an apparatus for implementing a specific function in one or more processes in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may also be loaded onto the computer or the another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

**Claims**

1. A communication method, comprising:

obtaining a first excitation coefficient and a second excitation coefficient; and
receiving or sending, by using a communication unit in a first mode and a communication unit in a second mode of an antenna, a signal, wherein the antenna comprises the communication unit in the first mode and the communication unit in the second mode, and the first mode uses the first excitation coefficient and the second mode uses the second excitation coefficient; and
the first excitation coefficient and the second excitation coefficient are determined based on the following factors:

a configured beam sweeping angle;
an excitation coefficient configured for the first mode; and
an excitation coefficient configured for the second mode.

2. The method according to claim 1, wherein there are nulls at a grating lobe location of the signal.

3. The method according to claim 1 or 2, wherein the first mode is a fundamental mode, and the second mode is a higher-order mode.

4. The method according to any one of claims 1 to 3, wherein the method further comprises:

obtaining configuration information, wherein the configuration information comprises the excitation coefficient configured for the first mode and the excitation coefficient configured for the second mode; or
the obtaining the first excitation coefficient and the second excitation coefficient comprises:
obtaining configuration information, wherein the configuration information comprises the first excitation coefficient and the second excitation coefficient.

5. The method according to any one of claims 1 to 4, wherein the method further comprises:
sending, by using the communication unit in the first mode and the communication unit in the second mode, a first signal based on the configured beam sweeping angle, wherein the communication unit in the first mode uses the excitation coefficient configured for the first mode, the communication unit in the second mode uses the excitation coefficient configured for the second mode, the first signal is used to determine a transmission channel matrix corresponding to the antenna, and the transmission channel matrix is used to determine the first excitation coefficient and the second excitation coefficient.

6. The method according to any one of claims 1 to 5, wherein the configured beam sweeping angle comprises a configured azimuth angle and a configured off-axis angle, the first excitation coefficient comprises a first amplitude value and a first phase value, and the second excitation coefficient comprises a second amplitude value and a second phase value; and

the configured azimuth angle is 0 degrees, the configured off-axis angle is 45 degrees, the first amplitude value is 0.9 times the second amplitude value, and a phase difference between the first phase value and the second phase value is 76 degrees; the configured azimuth angle is 45 degrees, the configured off-axis angle is 45 degrees, the second amplitude value is 0.95 times the first amplitude value, and a phase difference between the first phase value and the second phase value is 49 degrees; or the configured azimuth angle is 90 degrees, the configured off-axis angle is 45 degrees, the second amplitude value is 0.89 times the first amplitude value, and a phase difference between the first phase value and the second phase value is 83 degrees.

7. The method according to any one of claims 1 to 6, wherein an amplitude of the communication unit in the first mode in a broadside direction is a maximum value, and an amplitude of the communication unit in the second mode in the broadside direction is a minimum value.

8. The method according to any one of claims 1 to 7, wherein the communication unit in the first mode and the communication unit in the second mode are circularly polarized antennas.

9. The method according to any one of claims 1 to 8, wherein a center-to-center spacing between any two communication units in the antenna is greater than 0.5 times a wavelength, and the wavelength corresponds to an operating frequency of the antenna.

10. A communication apparatus, comprising a processing unit and a transceiver unit, wherein the processing unit is configured to obtain a first excitation coefficient and a second excitation coefficient; and

the transceiver unit is configured to receive or send a signal by using a communication unit in a first mode and a communication unit in a second mode of an antenna, wherein the first mode uses the first excitation coefficient, the second mode uses the second excitation coefficient, and the first excitation coefficient and the second excitation coefficient are determined based on the following factors:

a configured beam sweeping angle; an excitation coefficient configured for the first mode; and an excitation coefficient configured for the second mode.

11. The apparatus according to claim 10, wherein there are nulls at a grating lobe location of the signal.

12. The apparatus according to claim 10 or 11, wherein the first mode is a fundamental mode, and the second mode is a higher-order mode.

13. The apparatus according to any one of claims 10 to 12, wherein the transceiver unit is further configured to:

receive configuration information, wherein the configuration information comprises the excitation coefficient configured for the first mode and the excitation coefficient configured for the second mode; or the transceiver unit is specifically configured to: wherein the configuration information comprises the first excitation coefficient and the second excitation coefficient.

14. The apparatus according to any one of claims 10 to 13, wherein the transceiver unit is further configured to:

send a first signal based on the configured beam sweeping angle, wherein the communication unit in the first mode uses the excitation coefficient configured for the first mode, the communication unit in the second mode uses the excitation coefficient configured for the second mode, the first signal is used to determine a transmission channel matrix corresponding to the antenna, and the transmission channel matrix is used to determine the first excitation coefficient and the second excitation coefficient.

15. The apparatus according to any one of claims 10 to 14, wherein the configured beam sweeping angle comprises a configured azimuth angle and a configured off-axis angle, the first excitation coefficient comprises a first amplitude value and a first phase value, and the second excitation coefficient comprises a second amplitude value and a second phase value; and

the configured azimuth angle is 0 degrees, the configured off-axis angle is 45 degrees, the first amplitude value is 0.9 times the second amplitude value, and a phase difference between the first phase value and the second phase value is 76 degrees;

the configured azimuth angle is 45 degrees, the configured off-axis angle is 45 degrees, the second amplitude value is 0.95 times the first amplitude value, and a phase difference between the first phase value and the second phase value is 49 degrees; or

the configured azimuth angle is 90 degrees, the configured off-axis angle is 45 degrees, the second amplitude value is 0.89 times the first amplitude value, and a phase difference between the first phase value and the second phase value is 83 degrees.

16. The apparatus according to any one of claims 10 to 15, wherein an amplitude of the communication unit in the first mode in a broadside direction is a maximum value, and an amplitude of the communication unit in the second mode in the broadside direction is a minimum value.

17. The apparatus according to any one of claims 10 to 16, wherein the communication unit in the first mode and the communication unit in the second mode are circularly polarized antennas.

18. The apparatus according to any one of claims 10 to 17, wherein a center-to-center spacing between any two communication units in the antenna is greater than 0.5 times a wavelength, and the wavelength corresponds to an operating frequency of the antenna.

19. A computer-readable storage medium, comprising computer program instructions, wherein when the computer program instructions are executed by a computer, the computer performs the method according to any one of claims 1 to 9.

20. A communication apparatus, comprising a processor, wherein the processor is configured to execute a computer program or instructions, to implement the method according to any one of claims 1 to 9.

21. The apparatus according to claim 12, further comprising a memory and/or a transceiver, wherein the memory is configured to store the computer program or the instructions, and the transceiver is used by the apparatus for communication.

22. A communication apparatus, comprising a module configured to perform the method according to any one of claims 1 to 9.

23. A computer-readable storage medium, wherein the storage medium stores a computer program or instructions, and when the computer program or the instructions is/are executed by a communication apparatus, the method according to any one of claims 1 to 9 is implemented.

24. A computer program product, comprising a computer program or instructions, wherein when the computer program or the instructions is/are executed by a computer, the computer is enabled to implement the method according to any one of claims 1 to 9.

25. A chip, wherein the chip is coupled to a memory, and the chip reads a computer program stored in the memory, to perform the method according to any one of claims 1 to 9.

26. A communication apparatus, configured to perform the method according to any one of claims 1 to 9.

FIG. 1

FIG. 2

FIG. 3

Center-
to-center
← spacing →←—— Center-
to-center
spacing ——→

d1                    d2

Array
element

TR
component
1 ← Nearly one wavelength →

TR
component
2

FIG. 4

Communication
apparatus

Another
communication
apparatus

S101: The communication apparatus obtains a first
excitation coefficient and a second excitation
coefficient

S102: The communication apparatus receives or sends a signal by using a
communication unit in a first mode and a communication unit in a second mode of an
antenna, where the first mode uses the first excitation coefficient, and the second mode
uses the second excitation coefficient

FIG. 5

FIG. 6

Communication unit in a
first operating mode

Communication unit in a
second operating mode

FIG. 7

FIG. 8

FIG. 9

**Communication apparatus**

**Excitation coefficient determining apparatus + receiving antenna**

S201: The communication apparatus sends a first signal to the receiving antenna based on a configured beam sweeping angle by using a communication unit in a first mode and a communication unit in a second mode of an antenna

S202: Determine a channel matrix corresponding to the first signal by using test or simulation software based on the signal received by the receiving antenna

S203: Determine a first excitation coefficient and a second excitation coefficient based on the channel matrix corresponding to the first signal

S204: Configuration information, used to indicate the first excitation coefficient and the second excitation coefficient

FIG. 10

Second receiving antenna

First receiving antenna

0°

Port 2

45° 45°

Port 1

FIG. 11

Communication apparatus 1200

Processing unit 1210

Transceiver unit 1220

FIG. 12

1300

1310

Input/Output interface

1320

Processor

1330

Memory

FIG. 13

FIG. 14

## INTERNATIONAL SEARCH REPORT

| | International application No. |
|---|---|
| | **PCT/CN2023/089054** |

**A. CLASSIFICATION OF SUBJECT MATTER**

H04B7/185(2006.01)i

According to International Patent Classification (IPC) or to both national classification and IPC

**B. FIELDS SEARCHED**

Minimum documentation searched (classification system followed by classification symbols)

IPC:H04B7/-; H01Q1/-

Documentation searched other than minimum documentation to the extent that such documents are included in the fields searched

Electronic data base consulted during the international search (name of data base and, where practicable, search terms used)

CNTXT; WPABSC; ENTXTC; CNKI: 天线, 高阶模, 模式, 主模, 激励, 幅度, 相位, 波束, 扫描, 栅瓣, 零陷; WPABS; ENTXT; DWPI; 3GPP; IEEE: antenna, mode, excitation, amplitude, phase, grating lobe, scan+, beam

**C. DOCUMENTS CONSIDERED TO BE RELEVANT**

| Category* | Citation of document, with indication, where appropriate, of the relevant passages | Relevant to claim No. |
|---|---|---|
| A | US 2022131266 A1 (AVX ANTENNA, INC. D/B/A ETHERTRONICS, INC.) 28 April 2022 (2022-04-28) entire document | 1-26 |
| A | CN 112117532 A (COMMUNICATION UNIVERSITY OF CHINA) 22 December 2020 (2020-12-22) entire document | 1-26 |
| A | CN 113851833 A (UNIVERSITY OF ELECTRONIC SCIENCE AND TECHNOLOGY OF CHINA) 28 December 2021 (2021-12-28) entire document | 1-26 |
| A | WO 2004082070 A1 (NORTEL NETWORKS LIMITED) 23 September 2004 (2004-09-23) entire document | 1-26 |
| A | EP 3654544 A1 (EUROPEAN SPACE AGENCY) 20 May 2020 (2020-05-20) entire document | 1-26 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **02 January 2024** | **02 January 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| International application No. |
| --- |
| **PCT/CN2023/089054** |

| Patent document cited in search report | | | Publication date (day/month/year) | Patent family member(s) | | | Publication date (day/month/year) |
| --- | --- | --- | --- | --- | --- | --- | --- |
| US | 2022131266 | A1 | 28 April 2022 | KR | 20230093414 | A | 27 June 2023 |
| | | | | WO | 2022087533 | A1 | 28 April 2022 |
| | | | | EP | 4179597 | A1 | 17 May 2023 |
| CN | 112117532 | A | 22 December 2020 | | None | | |
| CN | 113851833 | A | 28 December 2021 | CN | 113851833 | B | 14 October 2022 |
| WO | 2004082070 | A1 | 23 September 2004 | AU | 2003286031 | A1 | 30 September 2004 |
| | | | | US | 2004157645 | A1 | 12 August 2004 |
| EP | 3654544 | A1 | 20 May 2020 | | None | | |

Form PCT/ISA/210 (patent family annex) (July 2022)